# EUROPEAN PATENT APPLICATION

(11) **EP 2 949 510 A1**
(43) Date of publication of application: **02.12.2015**
(21) Application number: 14425064.4
(22) Date of filing: 30.05.2014
(51) Int. Cl.: B60R 1/00, G07C 5/00, G07C 5/08, H04N 7/18, H04W 12/06

(54) **Method, system and apparatus for road safety**

(71) Applicant: Octocam S.r.l., 00173 Roma (RM) (IT)
(72) Inventor: Mungo, Andrea, I-16031 Pieve Ligure (GE) (IT)
(74) Representative: Ferroni, Filippo

(57) **Abstract**

The present invention relates to a road safety system and a method for improving road safety, wherein said system comprises at least one electronic apparatus (2,2a,2a',2a'') adapted to be positioned in a vehicle, to acquire information (video, audio, telemetric or other information) about the vehicle where it has been positioned, and to transmit said information, processing means (1) in communication with said at least one apparatus (2,2a,2a',2a") for processing the information acquired by the latter, and verification means enabled to verify the authenticity of the information acquired by said at least one electronic apparatus (2,2a,2a',2a").

## Description

According to a general aspect thereof, the present invention relates to road safety.

As is known, road safety is a very important subject of great topical interest because, unfortunately, the number of people who get injured or die during road accidents involving cars, motorcycles or the like is still too high.

However, the road safety problem is very complex because it depends on numerous factors: human factors, such as, for example, driver's ability and experience as well as his/her physical and psychological conditions (e.g. tiredness, intoxication, etc.); mechanical factors, such as vehicle maintenance and efficiency; environmental factors, such as atmospheric conditions, visibility, excessive speed, etc.

Notwithstanding the technologically advanced instruments available in modern cars, the increased number of checks made by traffic police, and the duties of vehicle inspection and maintenance, the road safety problem still cannot be deemed to have been solved in a satisfactory manner.

In particular, in addition to causing big losses in terms of human lives and injuries, the high number of road accidents is also a source of high social costs: these include, for example, medical and hospital expenses, compensations for damages and insurance costs.

On the other hand, it is unthinkable to limit road traffic; on the contrary, the number of circulating vehicles tends to increase, leading to a need for new solutions making for increased road safety.

The way to this target inevitably requires using the new technologies available today, such as satellite navigation, telecommunications and the like, which are already widely used in the automotive field, and which will most likely become increasingly important and reliable in the future.

A first example of technological application in this field is represented by United States patent application US 2003/028298 A1 by MACKY et al., which describes a method for capturing data about a road accident, which are then made available to authorized parties.

To such end, the method provides for using a video capturing apparatus to be installed on board the vehicle, so that it can capture images of the vehicle as it is being driven; in the event of an accident, the images can be remotely transmitted to a set of electronic computers (e.g. computerized terminals in a data centre), so that authorized parties (i.e. insurance companies, experts, technicians, etc.) will be allowed to view the images of the accident and thus will be able to pay damages, or to carry out insurance procedures in general, more quickly and effectively.

For data transmission, any air or cable telecommunications network can be used, such as a cellular or satellite telephone network.

Since accident data are remotely accessible to authorized parties (which also include, in addition to those already mentioned, public authorities such as traffic police, judges, etc.), all necessary checks can be made in a simple and effective manner, even remotely, by using a normal computer connected through the Internet, leading to significant savings in terms of time and costs for police investigations, sanitary or insurance procedures, or the like.

In principle, the method described in the above-mentioned United States patent publication is a valid solution because it provides control over the travelling conditions of a vehicle much like an airplane's black box, which records information about the airplane during the entire flight.

This makes for better road safety, if only because a monitoring system of this kind represents a stimulus of driver's attention and a deterrent against dangerous actions, since drivers, their actions being watched, are dissuaded from making hazardous or risky manoeuvres.

The Applicant has experimentally verified these circumstances.

However, the solution known from US 2003/028298 has some important limits that make it hardly usable on a large scale.

In fact, unlike what happens in the civil or commercial aviation fields, in the system described in US 2003/028298 the acquisition and transmission of images and other data occur through a publicly accessible telecommunications network, such as a mobile telephone network or a data traffic network (Internet), and therefore it is clear that the system is vulnerable.

As a matter of fact, the videos generates by the video camera installed on board a vehicle might get damaged during transmission or, which is a much more serious issue, they might be intercepted, modified or somehow manipulated by third parties, so that they cannot be considered to be reliable and usable for the above-mentioned purposes.

It is worth mentioning that the untrustworthiness or unreliability of the acquired data can frustrate or anyway reduce the effect thereof upon road safety, since drivers knowing the breaches of the system may think of deceiving the checks by tampering with the information captured by the video camera installed aboard the vehicle that they are driving.

The solution of transmitting encrypted data as described in US 2003/028298, although it is the most intuitive one for this kind of problem, does not appear to be satisfactory to ensure high reliability levels, unless specific image coding and decoding apparatuses and algorithms are used, which however would make this solution more complex and hardly applicable on a large scale.

In other words, it can be said that the solution known in the art appears to be more suited for application on fleets of vehicles such as buses, coaches and the like, managed by a single party, than for meeting the requirements of a public of single car drivers.

On the other hand, it cannot even be thought of providing specific computer systems and/or independent communications networks for implementing the method described in US 2003/028298, because this would inevitably limit its large-scale applications and developments.

Moreover, costs would be very high and service coverage would be limited.

The present invention aims at overcoming the above-mentioned limits and drawbacks of the prior art.

The technical problem at the basis of the invention is therefore to provide a method for road safety of the type taken into account above, which has such operating characteristics that allow it to ensure reliability of the data about the circulation of a vehicle.

The basic idea of the present invention is to make a verification of the authenticity of the acquired data, so that they can be discarded in the event that they turn out to be unreliable.

Such verification can be made at any time and at any point of the data transmission and/or reception processes, depending on how such processes are carried out.

In accordance with a preferred embodiment of the invention, the authenticity of the data is verified by cross-checking a plurality of pieces of information, the coherency of which is an index indicating that such information has not been altered.

In accordance with another possible embodiment of the method of the invention, following an event of interest (road accident or another event), integrity information is generated which allows to objectively verify that the collected data are intact and/or authentic, i.e. that they have not been modified after their acquisition.

The features of the method according to the present invention are more specifically set out in the claims appended to the present description.

The invention also comprises a system for implementing the method and an apparatus included in said system, the features of which are also set out in the appended claims.

Such features as well as further advantages of the present invention will become more apparent from the following description of a preferred example of embodiment thereof as shown in the annexed drawings, which are supplied by way of non-limiting example, wherein:
Fig. 1 is a schematic view of a road safety system according to the invention;
Fig. 2 is a block diagram of an electronic computer included in the road safety system of Fig. 1;
Fig. 3 is a front view of a first embodiment of a mobile apparatus included in the road safety system according to the invention;
Fig. 4 is a front view of a second embodiment of a vehicular mobile apparatus included in the road safety system according to the invention;
Fig. 5 is a rear view of the apparatus of Fig. 4;
Fig. 6 is a block diagram that shows the parts comprised in the apparatus of Figs. 4 and 5;
Fig. 7 is a flow chart that shows the operation of the vehicular mobile apparatus of Figs. 4 and 5;
Fig. 8 is a block diagram of a first variant of the apparatus of Figs. 4 and 5;
Fig. 9 is a block diagram of a second variant of the apparatus of Figs. 4 and 5.

Prior to describing in detail what is shown in the drawings, it is worth making clear that any reference to "an embodiment" in this description will indicate that a particular configuration, structure or feature described in regard to the embodiment is comprised in at least one embodiment. Therefore, the phrase "in an embodiment" and the like, which may be present in different parts of this description, will not necessarily be all related to the same embodiment. Furthermore, any particular configuration, structure or feature may be combined in one or more embodiments in any way deemed appropriate. The references below are therefore used only for simplicity's sake, and do not limit the protection scope or extension of the various embodiments.

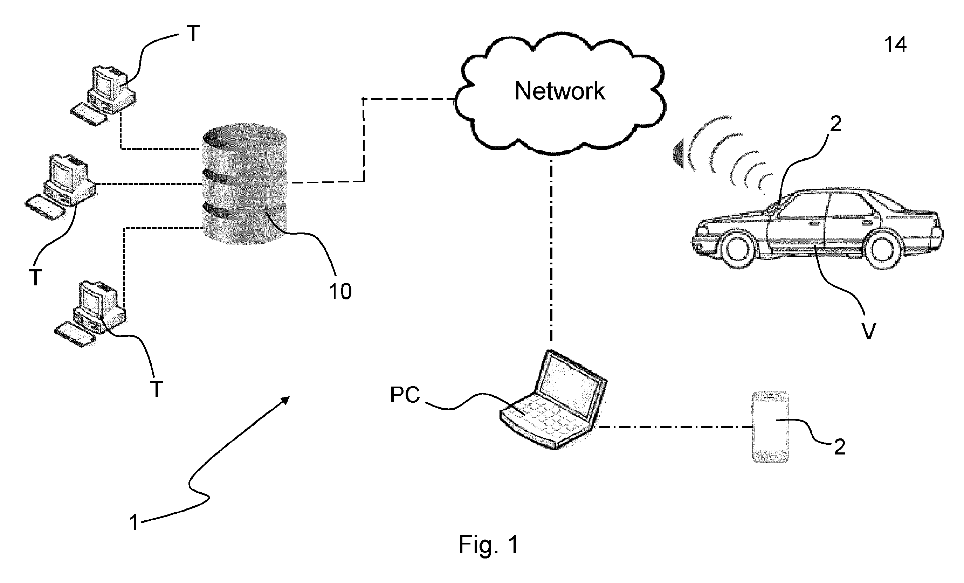

A road safety system according to the invention, designated as a whole by 1 in Fig. 1, comprises a portable apparatus 2, of the electronic type, to be arranged in a vehicle V in a position suitable for capturing images, i.e. on the front dashboard or on the windscreen: for this purpose, the apparatus may be associated with a support suitable for holding it firmly in position, which support is not shown in the drawings because it is *per se* known. Let us think, for example, of a bracket fitted with fixing means, such as a clamp or a sucker, depending on whether it is to be applied to the dashboard or to the windscreen. The apparatus 2 is adapted to acquire information about its travelling conditions.

Such information comprises at least two different types of data: video-audio data, corresponding to the images and sounds captured by the apparatus 2, and telemetric data, corresponding to the speed and/or acceleration of the vehicle V whereon it has been installed; in accordance with one possible embodiment of the invention, the data relating to speed and acceleration refer to different orthogonal axes, thus providing more complete information about the conditions of the vehicle V.

Preferably, the mobile apparatus 2 can also provide and transmit geolocation data; such data are typically those available for satellite navigation and comprise, among others, the geographical coordinates of the position of the apparatus 2 and of the vehicle V whereon it has been installed.

The mobile apparatus 2 can also transmit this information to processing means 10 via one or more communications networks schematically represented in Fig. 1 as a cloud, such as, for example, a telephone network, the Internet and/or a dedicated network; the apparatus 2 is also adapted to be connected, whether via cable or electromagnetic waves (e.g. radio waves using the so-called Bluetooth® protocol, or optical waves, infrared waves, etc.), to an electronic computer PC (Personal Computer) for personal or private use.

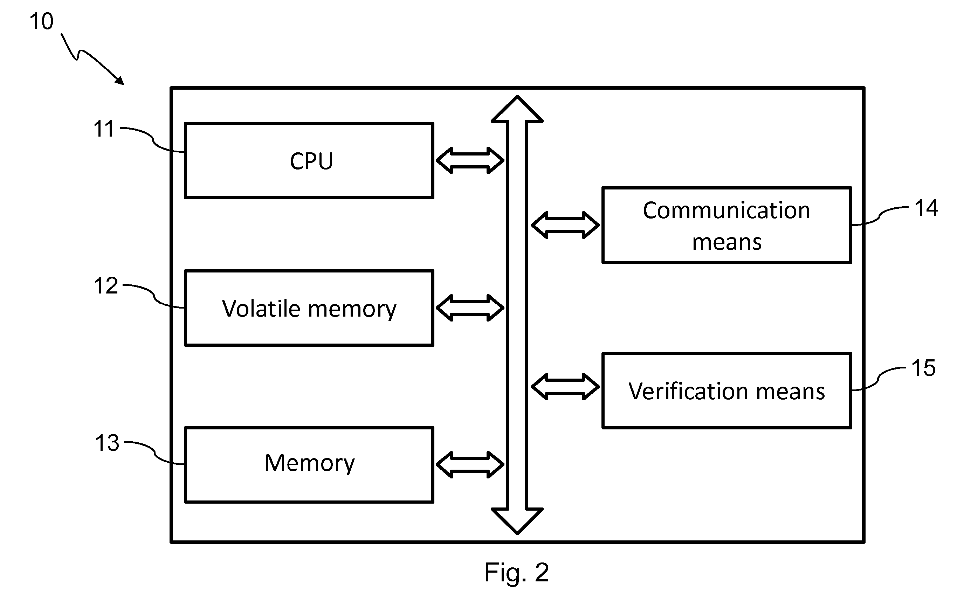

With reference to Fig. 2, the processing means 10 consist of a server apparatus, which may be more or less complex depending on the number of apparatuses 2 to be handled and on the complexity of the associated network.

The processing means 10 may be arranged remotely from the apparatuses, e.g. in a suitable data processing centre, and are advantageously accessible to authorized parties via a set of computer terminals T.

The data processing means 10 comprise, among others, the following logical blocks of functions:
- a central processing unit (CPU) 11;
- a volatile memory 12, e.g. RAM memory, for loading the instructions that the central processing unit 11 will have to execute;
- a mass memory 13, e.g. one or more mechanical or solid hard disks, for storing the instructions/data that must be transferred into the volatile memory 12 and then executed/processed by the CPU 11, as well as the information transmitted by the electronic apparatus(es);
- communication means 14, e.g. an Ethernet and/or WiFi interface or the like, allowing the processing means 10 to gain access to the computer network and to receive, via said network, the information transmitted by the electronic apparatus(es).

This system also comprises verification means which can verify the authenticity of the information acquired by the electronic apparatus(es) and transmitted to the processing means 1.

In the embodiment of the system according to the invention shown in Fig. 2, the processing means 10 comprise verification means 15 which, in turn, comprise hardware and/or software (loaded into the memory 13) that can verify the authenticity of the information received from said apparatuses.

If the information acquired by one of the electronic apparatuses comprise a video stream (e.g. compressed in accordance with the MPEG standard or the like) included in a file, a method for verifying the authenticity of the information comprises the following steps:
a. calculating, for each one of the frames comprised in said video stream, summary data (such as, for example, the mean, maximum, minimum, median, etc. values) on the basis of the luminance values of the pixels that compose each frame;
b. comparing the summary data obtained during step a. with typical values associated with a certain type of apparatus.

Tests carried out by the Applicant have shown that a particularly effective way to verify the authenticity of a video stream generated by reading a file compressed in accordance with the MPEG standard is to compare the mean luminance value of each frame with a typical luminance value associated with a particular type of apparatus that is supposed to have generated that file, wherein the type of apparatus can be determined, for example, by reading the appropriate field in the metadata of said file. In this manner, one can establish whether the file has been generated by a particular type of apparatus or not, thereby making it possible to evaluate the authenticity of the video stream contained in the file.

According to a preferred embodiment of the invention, the data relating to the video images and/or audio captured by the apparatus 2 are compared with at least one of the telemetric data and the geolocation data provided by the same apparatus.

It is thus possible to verify the coherence between the images of an accident, the place where it occurred, and the consequences it had upon the vehicle.

In this context, it must be pointed out that all the data provided by the apparatus are correlated to the time of the internal clock of the apparatus 2.

Thus, for example, if an accident occurs at 12.00 and involves the vehicle V whereon the apparatus 2 has been installed, the audio-video data of the accident, the telemetric data of the vehicle V, such as speed and acceleration, and the data relating to the vehicle's position (latitude and longitude) are recorded by the apparatus 2 and transmitted to the processing means 10, which are equipped with algorithms that will evaluate the coherence of such data, thereby establishing the reliability of the acquired data.

Furthermore, if after the impact caused by the accident shown in the images coherent variations in the speed and/or acceleration of the vehicle V are not found, the processing means 10 will signal an anomaly.

This might mean, in fact, that the images do not match the physical parameters of the vehicle and hence might have been altered.

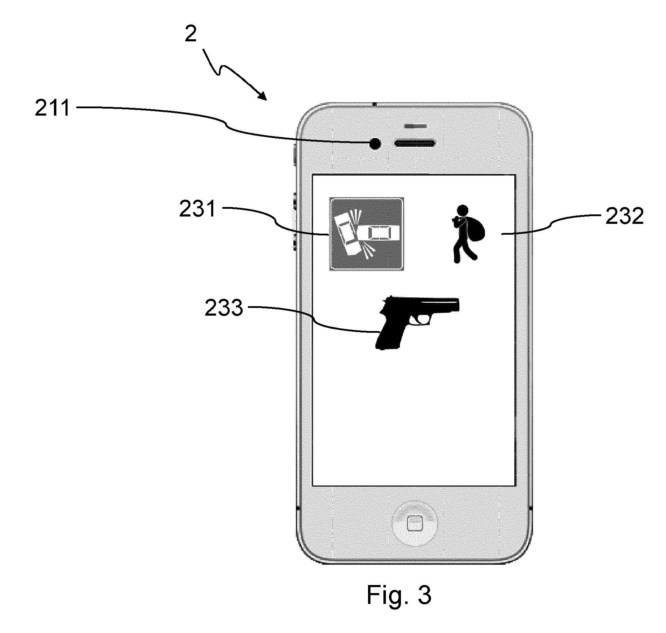

Also with reference to Fig. 3, in a preferred embodiment the road safety system 1 according to the invention comprises a mobile apparatus 2 consisting of a mobile phone (of the type commonly referred to as smartphone) or another mobile telecommunications device (e.g. a tablet or the like), enabled for data transmission (possibly in addition to voice communication); the apparatus 2 comprises at least one data processing unit (i.e. a microprocessor), network connection/transmission means, a memory containing at least one data acquisition program, the functions of which will be detailed below, a memory for allocation of the acquired data, as will be further explained below (these elements, which are *per se* known, are included in the telephone apparatus 2 and are not therefore shown in Fig. 3).

The data acquisition means of the mobile apparatus 2 comprise at least one video camera 211, which can take video shots, and preferably also a microphone, so that the shots taken by the video camera 211 are associated with external sounds and noise.

The data acquisition means may advantageously also include geolocation means, which allow to find the position of the mobile apparatus 2 and, consequently, of the vehicle V whereon it is located.

The data acquired by the mobile apparatus 2 may further include telemetric data, i.e. speed and/or acceleration along one or more axes, supplied by an accelerometric mass or the like, with which the apparatus 2 is equipped.

It should be noted that the above-mentioned elements are already present in some models of cellular telephones currently available on the market; it is therefore deemed unnecessary to provide further details in this regard, and reference should be made for brevity to the technical literature on this matter.

However, what is not yet known are the functions carried out by these elements, which may advantageously be controlled by a program stored in the mobile device 2, which program can be downloaded from the outside, e.g. through distribution services (via Internet, cable or the like) provided by specialized companies.

Said acquisition program, when executed, has the processing unit of the apparatus 2 carry out the following steps:
- storing at least a part of a video/audio data stream generated by the video camera 211, preferably compressed in MPEG format, which can then be saved into the memory of the apparatus 2;
- storing at least a part of the data relating to the position of the mobile apparatus 2, provided by the geolocation means with which it is equipped;
- storing at least a part of the telemetric data provided by the accelerometric means (mass, etc.) with which the mobile apparatus 2 is equipped;
- transmitting said data to the processing means 10 through the network, the mobile apparatus 2 being equipped with transmission means configured for allowing access to a mobile network and/or a WiFi network and/or the like.

The processing means 10 carry out the verification of the authenticity of the received data, which, if authentic, will then be stored; the authenticity verification thus performed offers the advantage that it requires no particular algorithms for encrypting and decrypting the data acquired by the mobile apparatus 2 and received by the processing means 10.

It must also be pointed out that, since such data are heterogeneous because they include video images, telemetric data and geolocation data, encryption and decryption could be made in the same way, and therefore there would be a risk of losing coherence among the different information.

Authorized people can then consult (via the computer terminals T) the accident data, the authenticity of which will have been ascertained by the processing means 10, so that they will be able to take any necessary steps. Authorized people may include personnel of insurance companies, technicians and experts, judges, etc., carrying out their own official duties.

Note that the transmission of the data to the processing means 10 from the mobile apparatus 2 can take place either directly, by network transmission of a message of appropriate format and/or size (SMS, MMS, email or the like), or by download to a private computer PC, from which they can then be sent to the processing means 10 over the network.

These options are both shown in Figure 1, wherein in one case the device 2 is located aboard the vehicle V and is directly transmitting the data (via SMS message or electronic mail) to the processing means 10 by using its own network connection, whereas in the second case the data acquired by the apparatus 2 are downloaded to a personal computer PC connected to the network, and then sent by the latter to the processing means 10.

The user interface to the latter is preferably an Internet site, thus making data transmission easier and quicker also for unskilled people.

The mobile apparatus 2 is configured for executing the program when a user selects a specific application, preferably identified by a corresponding icon 231 shown on the display 230 of the apparatus 2, or when he/she presses an enabled key, if it is equipped with a keyboard. To this end, several options are available.

According to a first option, the data acquisition program is coded in such a way as to acquire a stream of audio-video data generated by the video camera 211, a stream of geolocation data generated by the positioning means, a stream of telemetric data generated by the accelerometric means, at successive instants and at a preset frequency, which may vary according to the case, being however preferably higher than 10 Hz: this means that the data are acquired every tenth of a second or smaller fractions thereof (even hundredths or thousandths of a second).

In order to make the method of the invention executable on a large scale also by the general automotive public through the use of mobile apparatuses 2 such as cellular phones, tablets and similar devices of common use, it is necessary that the acquired data can be sent by the same apparatuses 2 in formats suitable for transmission over existing telecommunications networks (cellular telephony, Internet, etc.).

Although for video and audio data it would be preferable to use compression formats such as MP3, MPEG and the like, transmission may understandably be a problem when large quantities of data are involved, also because adequate networks (i.e. with a sufficiently bandwidth) are not always available.

Therefore, transmitting images about long time intervals (longer than 60 seconds) is not a feasible option, since it would require the transmission of very large amounts of data (very big files).

Consequently, it is inconceivable to activate the mobile apparatus 2 every time the driver gets into the car and to acquire data throughout the journey, even just for a few tens of minutes, as is the case when driving through town (e.g. from home to work).

In other words, it can be said that, since the moment when an accident may occur cannot be foreseen a priori, a solution needs to be found to avoid having to acquire and store large quantities of data provided by the apparatus 2 throughout the journey of the vehicle V, because this would require too much memory that could not be supported by a mobile apparatus 2 consisting of a common mobile phone or another similar portable device.

To overcome this problem, one option is to set up the apparatus 2 for acquiring and storing the (audio-video, telemetric, positioning) data into a local memory area in a continuous stream, wherein the data are overwritten after a certain period of time, e.g. every 30 or 60 seconds.

When the vehicle V equipped with the apparatus 2 has an accident, the latter's accelerometric means will detect a speed and/or acceleration variation that will trigger a procedure ("routine") of the apparatus 2, whereby the data relating to a preset time interval before and after the accident (e.g. 15-20 seconds before and after) will be stored into a special memory area of the apparatus 2 and will then be sent to the processing means 10.

As explained above, transmission may occur directly through an SMS or MMS telephone message or an email message, in that the apparatus 2 is a mobile telecommunications device such as a mobile phone, a tablet or the like.

Transmission may be triggered either automatically by the apparatus 2, if the latter has been so programmed, or manually.

To this end, an icon 231 is advantageously provided on the display 230 of the apparatus 2 to allow the user to immediately execute the program for sending the data to the processing means 10.

As an alternative to or in combination with this mode of operation, according to a preferred embodiment of the invention the apparatus 2 continuously acquires and stores the audio-video, telemetric and geolocation data of the vehicle V whereon it has been installed for long preset periods, e.g. 10 minutes or even longer, depending on the memory capacity of the mobile apparatus 2.

Preferably, the length of said period can be set at will by a user, e.g. prior to beginning a journey of known duration.

If during such time interval no accident takes place, the acquired data will be automatically deleted by the apparatus 2, thereby freeing up memory space for future use, for a period equal to the previous one.

If, on the contrary, an accident occurs during said time interval, the significant data, i.e. those relating to the instants before and after the accident (a few seconds will suffice), can be selected from the video, audio, telemetric and geolocation data stored in the apparatus 2. This selection can be made by using image processing programs like those available on some models of mobile phones (smartphones), or by using suitable (software) programs created for processing telemetric and geolocation data, which can be installed into the mobile apparatus 2 and/or a computer PC, i.e. a personal computer or the like.

In this manner, two goals are attained: on the one hand, data packets (i.e. files) of limited size are obtained, which can then be easily transmitted directly by the apparatus 2 via messages (SMS, email or the like); of course, the same data selection and transmission operations can also be carried out by using a computer PC for private use connected to the network, as shown in Fig. 1.

On the other hand, this data acquisition and processing solution has the merit of eliminating the risk of so-called false positives.

In the previous solution, in fact, wherein the accelerometric means of the apparatus 2 determine, upon reaching a preset acceleration threshold value, the start of a routine that stores and sends the data relating to time intervals before and after the event, it may happen that the event is not actually an accident.

Let us think, for example, of accelerations caused by road irregularities, such as bumps, drains and the like, or even only hard acceleration and braking induced by the driver's style: in such circumstances, the accelerometric means of the apparatus 2 might detect the crossing of the threshold value and hence activate the data storage and transmission routine.

This would however be a false positive, i.e. a false accident, and it would be desirable to avoid such situations.

For this purpose, it may be conceivable to increase the sensitivity threshold of the apparatus 2, but this might reduce the instrument's sensitivity and effectiveness.

The above example of the invention is particularly advantageous because it can be implemented on commercially available mobile phones, thus requiring no additional costs for specific apparatuses.

This embodiment is therefore particularly suitable for large-scale applications like those involving private car drivers, in that on the one hand the data acquisition means can consist of common cellular phones or other widespread mobile devices, while on the other hand the authenticity and reliability of the information transmitted by them are verified in an effective and quick manner.

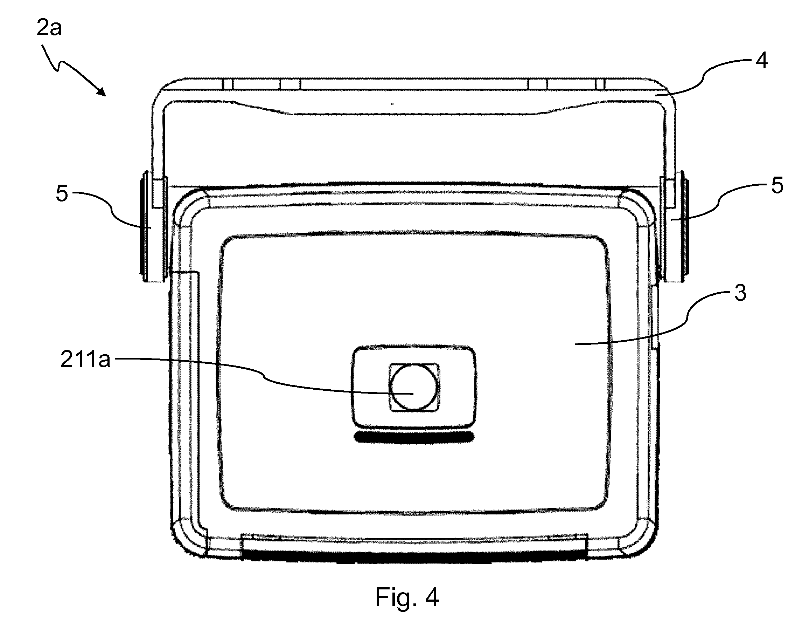

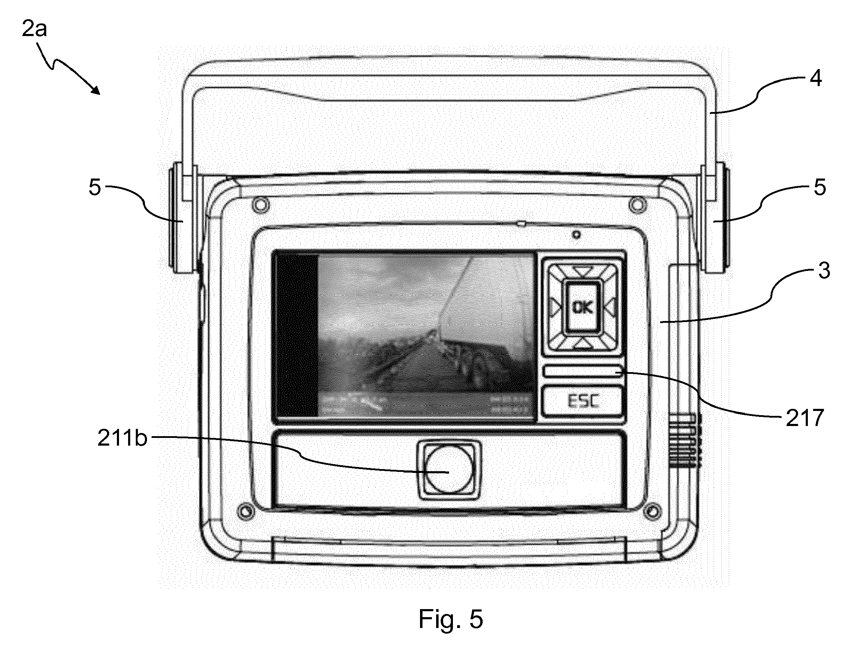

The invention may nonetheless be subject to variations, one of which will now be described with reference to Figures 4-6, which show a mobile apparatus 2a intended for installation on a vehicle V, similarly to the previous case.

The apparatus 2a has similar functionalities as the apparatus 2 of the first embodiment, even though it is not a cellular phone, but a device specifically designed for the functions that it has to carry out.

The apparatus 2a comprises a body 3, preferably parallelepiped in shape, and a support 4 attached to said body 3 through constraining means 5, such as, for example, one or more rotary hinges, which allow the body 3 to rotate relative to the support 4. In this way, the apparatus 2a can be constrained to a vehicle by means of the support 4. In addition, the constraining means 5 allow adjusting the position of the body 3 with respect to the support 4, so as to make it easier to position and install the apparatus 2a on a vehicle like a car, a motorcycle, a truck or the like.

This apparatus 2a can preferably be positioned in proximity to the windscreen of a car or a van/truck, or the fairing of a motorcycle. In fact, the apparatus 2a also comprises data acquisition means that preferably comprise a first video camera 211a, preferably positioned within the body 3 so as be able to frame the main direction of travel of the vehicle equipped with said apparatus; said data acquisition means may optionally comprise also a second video camera 211b, which is preferably turned by 180° relative to the first video camera 211a, so as to be able to frame the rear window and/or any passengers in the rear seat of a car (let us think, for example, of a public car like a taxi cab, where law and order problems may arise).

The apparatus 2a further comprises detection means configured for generating at least one signal pertaining to a preset condition of the vehicle, so that said apparatus 2a can detect the occurrence of said preset condition, e.g. the one corresponding to a road accident, a theft, an aggression, etc. These detection means preferably comprise accelerometric means and/or at least one push-button, wherein said accelerometric means comprise an accelerometer preferably with two or more axes (e.g. a MEMS accelerometric sensor) capable of detecting accelerations taking place during a road accident (e.g. a collision between vehicles or a crashing motorcycle or the like) and/or an aggression or a theft (e.g. a shock necessary for breaking a window of a car).

It is nevertheless possible for the man skilled in the art to use, as detection means, sensors of other kinds (e.g. pressure sensors, volumetric sensors, or the like) without however departing from the teachings of the present invention.

As will be better explained below, it must be pointed out that the data acquisition means may also comprise the detection means.

The apparatus 2a also comprises a circular buffer 213 in signal communication with the data acquisition means, i.e. with one or more video cameras 211a,211b, preferably through a data bus or a wireless connection; said circular buffer 213 is configured for recording, in a continuous manner, the video stream coming from the data acquisition means, so as to keep in the memory, for example, the video recording of the time period, preferably 10-20 seconds, that precedes the occurrence of the preset condition. This circular buffer may also be provided by means of a specially developed memory chip or a memory, e.g. a flash memory, the read/write access to which is controlled by a software or hardware component implementing the access discipline of the circular buffer, i.e. when the buffer is full, older data are overwritten by newer data (just acquired by the data acquisition means).

The apparatus 2a further comprises memory means 214 that can permanently store the information acquired by the data acquisition means, such as, for example, the videos captured by the video cameras 211a,211b and/or telemetric information acquired by the accelerometers 212 and pertaining to one or more events of interest. These memory means 214 may comprise a mass memory, preferably a flash memory, and/or a hard disk, and/or the like.

It must be pointed out that the memory means 214 may also be used for containing the data of the circular buffer 213, thereby simplifying the architecture of the apparatus 2a. In fact, as aforementioned, the circular buffer can be implemented by adequately disciplining the management of the read and write operations from/to a generic memory through suitable software/hardware well known to those skilled in the art.

The apparatus 2a further comprises a central processing unit (CPU) 215 in signal communication with at least the detection means 212; said CPU 215 is configured, for example through suitable software, for transferring, whether directly or indirectly, e.g. by means of the direct memory access (DMA) mode, at least a part of the contents of the circular buffer 213 into the memory means 214 when the detection means detect a preset condition (road accident, robbery, theft, etc.), i.e. when said detection means generate a signal indicating said preset condition.

In addition, the CPU 215 may also be configured for transferring into the memory means 214 the data acquired by the data acquisition means (e.g. by at least one of the video cameras 211a, 211b) within a time interval (of preset duration), the beginning of which coincides with or is subsequent to the time instant when the preset condition of interest has occurred. It is thus possible, in the event of a road accident, to store the recording of the video cameras 211a,211b pertaining to the events that precede and follow an accident involving a vehicle equipped with the apparatus 2a according to the invention; said apparatus 2a is, in fact, preferably configured for recording a video stream concerning the period of 2-20 seconds before and the period of 2-20 seconds after the time instant when the condition of interest has occurred (in this case, the accident). It must be highlighted that the man skilled in the art may use different periods that may better suit specific application requirements, without however departing from the teachings of the invention.

It should also be noted that all of the above-described components are in logical communication with one another through a data bus of the kind which is well known to those skilled in the art. The man skilled in the art may use any architecture suitable for connecting together the different parts (e.g. a star-type connection architecture), without however departing from the teachings of the present invention.

Furthermore, when the data acquisition means include more than one component, the data streams generated by said components may be synchronized and joined into a single data stream. In this manner, the video stream captured by the video cameras 211a,211b can be joined to an audio stream that may be acquired through a microphone comprised in the apparatus 2a and/or to a data stream that may, for example, be detected by the accelerometers (telemetric data stream). It will thus be possible to analyze not only a video stream, but also an audio stream and/or a telemetric data stream that may be useful for better understanding the dynamics of the event of interest.

In fact, by acquiring at least two data streams, the verification means can advantageously verify the authenticity of the information collected by the apparatus 2a by comparing the information contained in the acquired streams on the basis of a common time reference. One example of this approach is given by the comparison between the speed information detected through the GPS and the acceleration information detected by the accelerometers; such a comparison allows, for example, to establish if the speed detected at a certain time instant is compatible with the accelerations detected previously. One way to verify if the speed information is compatible with the accelerometric information comprises the following steps:
a. integrating, during a time interval, an acceleration function defined by points from the values detected by the accelerometers, so as to obtain a speed variation value;
b. calculating the arithmetic difference between the speed values detected by the GPS at the end and at the beginning of the time interval;
c. checking if the result obtained from the integration carried out at step a. is compatible with the difference obtained at step b.

One way to make the comparison at step c. is to calculate the arithmetic difference between the results respectively obtained at the end of steps a. and b., and to verify whether the absolute value of this difference is smaller or not than a preset threshold value. In fact, if the absolute value of this difference is smaller than said threshold value, then the data can be considered to be authentic; otherwise, the data will have to be considered to have been altered.

The data stream generated by the acquisition means is then preferably coded in accordance with one of the MPEG family standards, by using any coding algorithm well known to those skilled in the art.

As an alternative or in addition to the data detected by the accelerometers 212, the data acquisition means may comprise positioning means 218 (e.g. a GPS/GLONASS/EGNOS, A-GPS receiver or the like), so that the telemetric data stream may also include position information. It will thus be possible, at the analysis stage, to represent on an interactive map (e.g. by using Google Maps, Bing Maps or the like) the motion of the apparatus 2a before and after the event of interest, which is detected as the apparatus 2a gets into the condition of interest.

By using said positioning means 218, it is possible to know also the motion speed of the apparatus 2a, and hence of the vehicle equipped with said apparatus 2a.

As an alternative or in addition to the positioning means 218, the apparatus 2a may comprise a data interface (not shown in the drawings), which allows it to interface to the data network of the vehicle equipped with the apparatus 2a (typically a CAN bus network). In this manner, the apparatus 2a can also acquire and store into the telemetric stream data about wheel speed, engine rpm, selected gear, operation of the anti-lock braking system (ABS) and/or of the electronic stability program (ESP), etc. Furthermore, through this data interface the apparatus 2a can also read the vehicle identification number (VIN) associated with the engine of the vehicle. The usefulness of this number will become apparent below. The information or part thereof which is transferred into the memory means 214 upon the occurrence of the preset condition is then used by the central processing unit 215. In fact, said central processing unit 215 can be configured for generating integrity information based on at least a part of the information transferred into the memory means 214 from the circular buffer 213 and/or from the data acquisition means.

As will be explained hereafter, when the apparatus 2a generates said integrity information the verification means of the system according to the invention are allocated in both the processing means 10 and said electronic apparatus 2a.

The integrity information is preferably generated by the CPU 215, which is configured for executing a cryptographic hashing algorithm, such as, for example, the Message Digest algorithm 5 (MD5), the RIPEMD, the Secure Hash Algorithm (SHA), or the like. These algorithms allow to generate a summary (hash) of a dataset, which in this case is represented by the information acquired by the apparatus 2a before and/or after a preset operating condition. The integrity information, generated via these algorithms immediately after entering said operating condition, can thus be used for verifying that the information coming from the memory means 214 is intact, and hence has not been altered.

As a matter of fact, when using prior-art solutions a user can download information from the memory means 214, modify it (e.g. by using video editing software), and then supply it as evidence (e.g. to an insurance company), without it being possible to objectively verify that said information has not been altered.

With the above-described solution, the processing means 10 can verify the integrity of the information acquired by the apparatus 2a before and/or after the event. In order to do so, said processing means 10 can recalculate the integrity information based on the information downloaded from the memory means 214 (or supposed to have been downloaded from said memory means 214) and verify that said recalculated integrity information correspond to the integrity information generated by the apparatus 2a immediately after or during the event of interest, i.e. generated on the basis of at least a part of the information transferred into the memory means 214 from the circular buffer 213 and/or from the data acquisition means after the occurrence of the event of interest.

It is nevertheless still possible for the man skilled in the art to have the CPU 215 generate integrity information by means of other algorithms (e.g. generation of parity, checksum, or the like), without however departing from the teachings of the present invention.

The apparatus 2a comprises also a control interface 217, through which a user can control the operation of said apparatus via one or more push-buttons. In addition, the detection means may comprise one or more push-buttons of the control interface 217, so that the user can signal a preset condition of interest (e.g. an event like an aggression, a robbery or an accident in which he/she has not been directly involved, or the like, and have the apparatus 2a store into the memory means 214 information acquired by the apparatus 2a before and after the event of interest.

The data acquisition means may also comprise one or more push-buttons of the control interface 217, so as to record into the memory means 214 the actuation of one or more push-buttons. It will thus be possible, for example, to evaluate the state of consciousness of a person involved in the accident.

It must be pointed out that the parts of the apparatus 2a just described are preferably all arranged inside the body 3, so as to advantageously ensure increased compactness of the apparatus 2a and ease of installation and/or transfer from one vehicle to another.

It is nevertheless still possible for the man skilled in the art to arrange the above-mentioned parts in different areas of the vehicle (e.g. the accelerometers in the bumpers, the second video camera near the rear number plate, etc.), without however departing from the teachings of the present invention.

Moreover, the apparatus 2a may also be replaced by a smartphone (e.g. like the one used in the preceding embodiment), a tablet or the like, where suitable software can be installed (e.g. downloadable from an online shop of applications for mobile devices and the like), which can execute a method for acquiring information about at least one road event of interest in accordance with the invention; said method comprises the following steps:
a. recording into the circular buffer 213 the information coming from the data acquisition means, e.g. at least one video camera 211a,211b;
b. transferring into the memory means 214 at least a part of the information acquired during step a. and/or of the information generated by the video camera 211a,211b after the occurrence of the preset condition;
c. generating integrity information based on at least a part of the information transferred into the memory means 214 during step b.;
d. storing in a stable and/or safe manner the integrity information generated during step c..

The integrity information can be stored in several ways. In fact, said information can be stored into the memory means 214 and subsequently downloaded into the memory 13 of the processing means 1, e.g. through a network or USB interface or the like, when it is desired that said processing means 10 verify the integrity of the information acquired by the apparatus 2a at the occurrence of the preset operating condition.

In order to advantageously reduce the probability that the integrity information might be generated after a modification (e.g. by video editing) of the information contained in the memory means 214, the apparatus 2a may comprise a programmable memory 216 that can be written only once and read multiple times, such as a Programmable Read Only Memory (PROM). In fact, each cell of a PROM memory can be written only once by using signals of adequate voltage. In this way it is possible to ensure that the integrity information present in the programmable memory 216 has been generated immediately after the event of interest, i.e. at a time instant when a "malicious" user could not (yet) alter the contents of the memory means 214.

Access to the contents of the memory 216 can be gained either from outside the apparatus 2a, e.g. through a network or USB interface, or only by removing the programmable memory 216.

It must be pointed out that the contents of the programmable memory 216 needs to be acquired at the stage wherein it is necessary to verify the integrity of the information acquired by the apparatus 2a following an event of interest, e.g. when an expert of an insurance company or a bailiff or an examining magistrate needs to place on record the information acquired by the apparatus 2a.

In order to advantageously improve the protection of the information acquired by the apparatus 2a against attacks by a computer expert, the integrity information may also be generated on the basis of time information, e.g. the date and time when the event of interest has occurred, in addition to the information already described. This time information may, for example, be associated with the data acquired by the positioning means 218, which then become a part of the telemetric stream stored into the memory means 214, or else it may be stored into the memory means 214 separately from the other information acquired before and after the event of interest, e.g. contained in a text file. In this manner, when the processing means 10 verify the integrity of the information that is supposed to have been downloaded from the memory means 214 and to not have been altered afterwards, the processing means 10 will have to recalculate the integrity information based on the information that is supposed to have been downloaded from the memory means 214 and on the time information (that may also be present in the memory means 214).

If time information is also used for generating integrity information to be stored into the programmable memory 216, it will be more complex and difficult to generate a false event of interest, e.g. putting on an accident, because one can be reasonably certain about the time at which said event occurred. In fact, highly reliable time information can help investigators, for example, verify the declarations of any witnesses who were present at the time of the accident or the versions of the people involved in said accident.

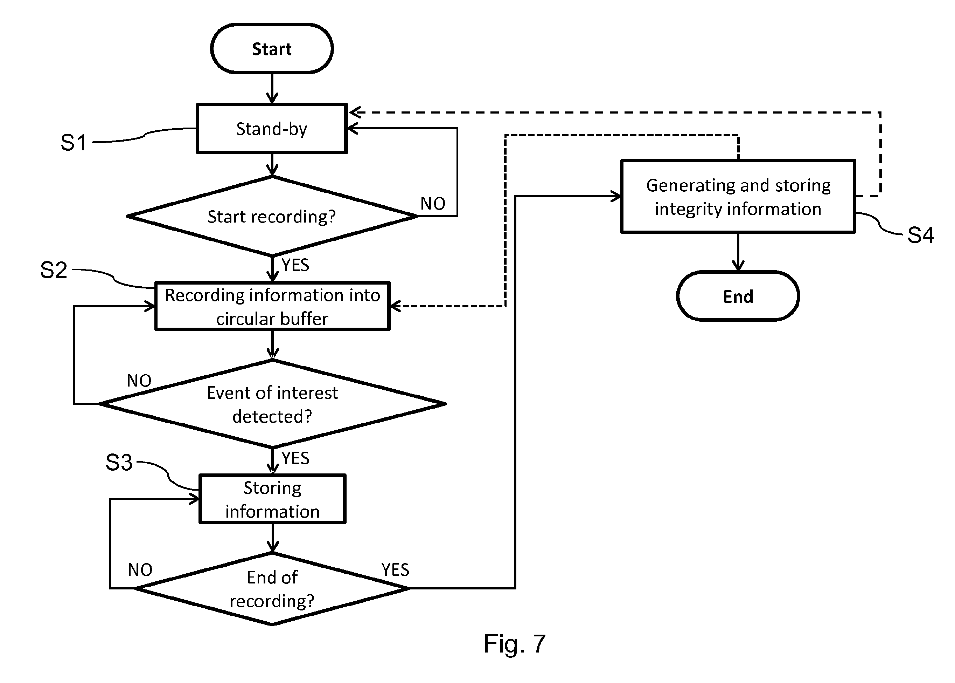

Also with reference to Fig. 7, one possible mode of operation of the apparatus 2a according to the invention is represented by means of a finite-state machine; said mode of operation can be implemented through software which is then executed by the central processing unit 215 and/or by a programmable hardware component (e.g. a CPLD or a FPGA or the like) or a specially developed one. The finite-state machine comprises the following states:
- a stand-by state S1, wherein the apparatus 2a carries out no recording function;
- a recording state S2, wherein the apparatus 2a records into the circular buffer 213 the information acquired by the data acquisition means, e.g. at least one of the video cameras 211a,211b;
- a storing state S3, wherein at least a part of the contents of the circular buffer 213 and/or of the information generated by the data acquisition means after the event of interest are transferred into the memory means 214;
- an integrity information generating state S4, wherein the central processing unit 215 generates the integrity information, as described above, based on at least a part of the information transferred into the memory means 214 from the circular buffer 213 and/or from the data acquisition means.

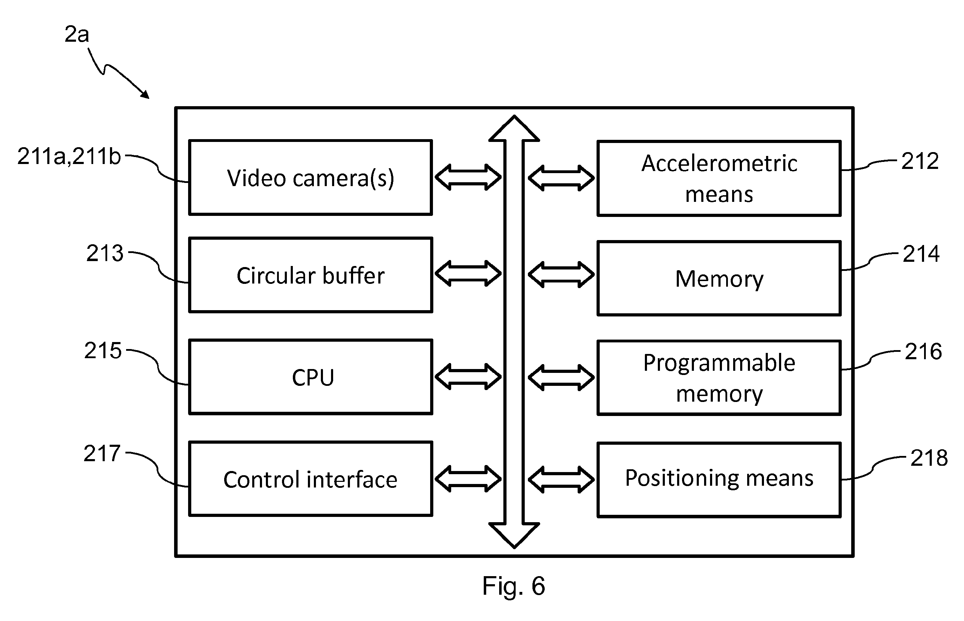

When the apparatus 2a is turned on, it enters the state S1, where it stays until recording start conditions occur which cause the recording to start; when this happens, the machine enters the state S2. These conditions may occur, for example, when the engine of the car is started and/or a surveillance mode is selected through the control interface 217, which allows recording information into the circular buffer 213 even when the vehicle is not moving, thus making it possible, for example, to document events of interest such as a burglary attempt or a collision caused by another driver's clumsy parking manoeuvre. When an event of interest is detected, the apparatus 2a switches from the state S2 to the state S3, wherein it stores the information acquired before and after a preset condition, corresponding to the event of interest, into the memory means 214; when storage is complete, the apparatus 2a enters the state S4, wherein it generates the integrity information based on what has been stored (or is being stored) into the memory means 214, and stores said integrity information as deemed appropriate (e.g. into the programmable memory 216). After the integrity information has been generated, the apparatus 2a either ends it own operation or, as highlighted by the dashed lines in Fig. 6, enters again the state S1 or the state S2, ready for a new operating cycle.

Of course, many variations are possible with respect to the embodiment described above.

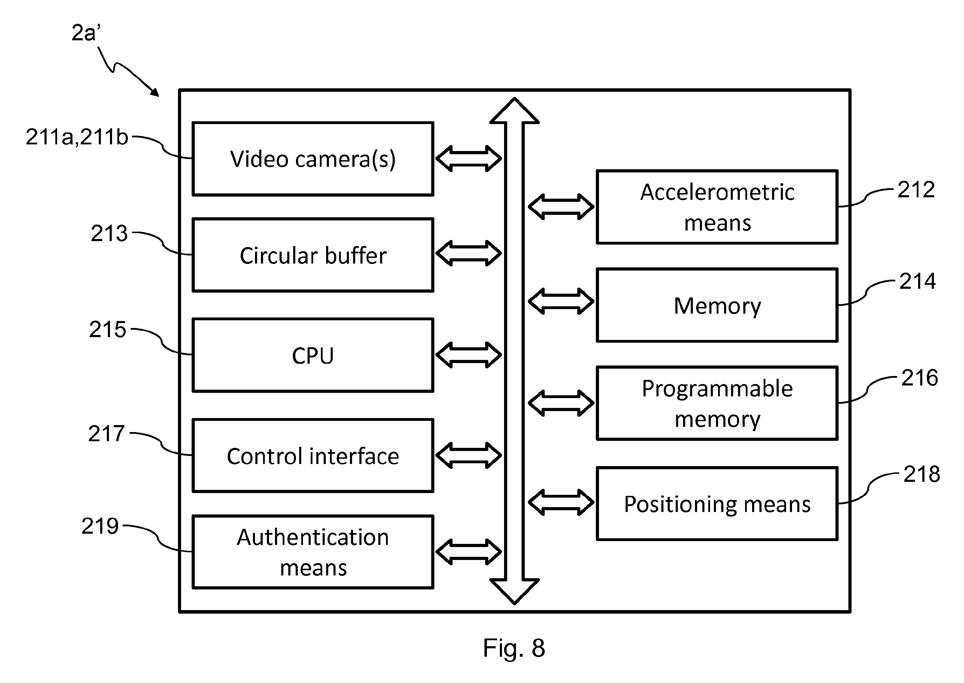

A first variant is shown in Fig. 8; for brevity, the following description will only highlight those parts which make this and the next variants different from the above-described second embodiment; for the same reason, wherever possible the same reference numerals, with the addition of one or more apostrophes, will be used for indicating structurally or functionally equivalent elements.

For the purpose of further improving the robustness of the information acquired by the apparatus 2a' against attacks by a computer expert, this variant comprises an apparatus 2a' similar to the apparatus 2a of the preceding embodiment, wherein said apparatus 2a' additionally comprises authentication means 219 that may comprise, for example, a cryptographic processor (like that of a smart card), which can generate a public key and a private key during an initialization step, hold the generated private key (thus preventing access thereto from the outside), and encrypt integrity information, through an asymmetric cryptography algorithm (e.g. RSA, Digital Signature Algorithm - DSS, or the like), by using the private key it contains; such integrity information is generated by the CPU 215 as described for the preceding embodiment.

By using the authentication means 219, one can be certain that the integrity information is generated by a particular apparatus 2a', i.e. said apparatus 2a' is authenticated.

In order to verify the integrity of the information acquired by the apparatus 2a', the processing means 10 can take the public key during the cryptographic processor initialization step, or even after said step (e.g. by suitably interrogating the cryptographic processor), and then use it to decrypt the integrity information by using the same asymmetric cryptography algorithm used by the cryptographic processor or the corresponding decryption algorithm capable of decrypting the information encrypted by the cryptographic processor. Afterwards, the processing means 10 can verify the integrity information in the same way as described for the preceding embodiment (recalculation of the integrity information, etc.), thereby making it possible to verify the authenticity and integrity of the information collected by the apparatus 2a'.

As an alternative to the use of a cryptographic processor as an authentication means 219, the man skilled in the art may use, in a way similar to that described above, a digital certificate (optionally password-protected) and a software implementation of an asymmetric cryptography algorithm.

The man skilled in the art may also use authentication means 219 other than those described above, without however departing from the teachings of the present invention.

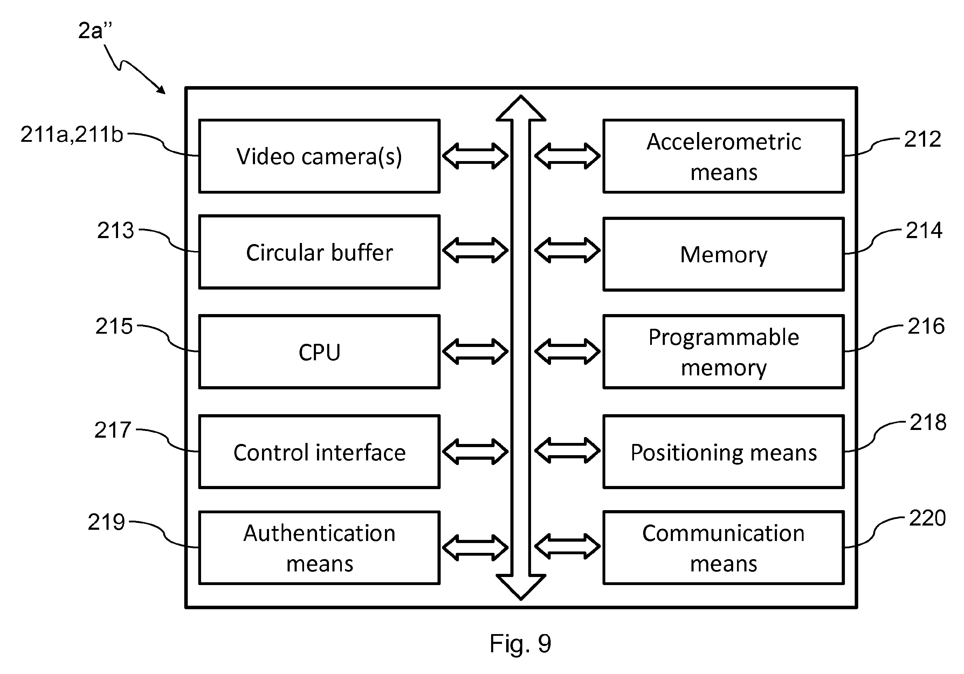

Also with reference to Fig. 9, a second embodiment of the invention will now be described, which comprises an apparatus 2a'' similar to the apparatuses 2a,2a' of the previously described variants; said apparatus comprises communication means 220 allowing it to communicate with a data network external to said apparatus 2a''. These communication means 220 preferably comprise a cellular modem of the GSM/GPRS/3G/4G type or the like, which allows the apparatus 2a'' to transmit, e.g. through the Internet or a dedicated data circuit or another type of network, the integrity information (generated as described for the preceding variants) to the processing means 1.

In this manner it is possible to further improve the robustness of the information acquired by the apparatus 2a' against attacks by a computer expert, since the integrity information reside (only or also) on a computer different from the apparatus 2a''. Furthermore, it must be pointed out that the integrity information is preferably transmitted immediately after it has been generated or as soon as possible (e.g. because the event of interest has occurred in an area without cellular coverage), thus increasing the probability that the information collected by the apparatus 2a'' before and/or after the event of interest is intact (i.e. it has not been altered by a computer expert) and that any modifications will be objectively detected, since a computer expert will not have had enough time to modify said information collected by the apparatus 2a'' and to regenerate the integrity information.

The processing means 10 can be managed by an insurance company or a country's central authority (e.g. a ministry) or another body that can ensure a sufficient level of service and a sufficiently high level of security for the collected data to ensure that they are correct and hence reliable; also, in order to better protect the privacy of the data, the latter may be transmitted to the central server by means of a secure data channel, e.g. by using the TLS/SSL cryptographic protocol or the like.

It must be pointed out that the above-described solution poses no particular problems as concerns regulations in defence of the privacy of personal data, since the information that is transmitted is only the integrity information, not the information collected by the apparatus 2a'' before and after the event of interest. In fact, the transmission of the integrity information alone allows to establish which apparatus 2a'' has made the transmission, and hence which apparatus 2a'' has detected an event of interest, and possibly also, knowing on which vehicle said apparatus 2a'' has been installed, which vehicle has been involved in an event of interest. These data do not constitute a privacy violation, because the person who installs the apparatus 2a'' on a vehicle that he/she uses, or who installs the application implementing the method of the invention into a mobile phone accepts, whether implicitly or explicitly, that the integrity information will be transmitted to a central server. Besides, from the integrity information alone it is not possible to go back to the information collected by the apparatus 2a'' before and after the event of interest, and therefore it is not possible to go back to other parties involved in the event of interest, thus preserving said parties' privacy.

Finally, it must be underlined that in the variants taken into account above, wherein the apparatus 2a, 2a', 2a'' transmits coded integrity information, the transmission, coding and decoding operations are facilitated by the fact that such information contains a reduced quantity of data. In other words, these variants of the invention ensure an adequate level of security as concerns the authenticity of the images and of the other telemetric and positioning data acquired by the road safety system 1, without requiring complex algorithms for encrypting and decrypting the information.

It should be noted that also in this case the encryption and decryption of heterogeneous data like those consisting of video-audio images and telemetric and geolocation detections would imply technical difficulties and risks related to loss of uniformity, which could make such data unusable or anyway unreliable.

The invention may therefore be subject to many variations, without however departing from the novelty spirit of the inventive idea. It will be apparent to those skilled in the art that in the practical implementation of the invention the illustrated details may have different shapes or be replaced with other technically equivalent elements.

It can therefore be easily understood that the present invention is not limited to the explanatory examples described herein, but may be subject to many modifications, improvements or replacements of equivalent parts and elements without departing from the basic inventive idea, as set out in the following claims.

## Claims

1. A method for road safety, comprising the steps of:
- acquiring video data and at least one of telemetric data and/or geolocation data, relating to the conditions of a vehicle (V);
- transmitting the acquired data to processing and/or storing means (10) in the event of a road accident;
**characterized in that**
it comprises a step of verifying the authenticity of the acquired data.

2. A method according to claim 1, wherein the step of verifying the authenticity of the data is carried out at least partly by comparing the video data with at least one of the telemetric data and the geolocation data, so as to ascertain their coherence on the basis of a common time reference.

3. A method according to claim 1 or 2, comprising a step of calculating, for the video data, summary data on the basis of the luminance values of the pixels that compose the frames; and
comparing the summary data thus obtained with preset reference values.

4. A method according to any one of the preceding claims, wherein the step of acquiring the data is carried out for a preset period of time, and wherein the method further comprises a step of selecting, among the acquired data, some data preceding and some data following the instant of an accident, to be subjected to the verification step.

5. A method according to claim 4, wherein the step of selecting the data is carried out on data comprised within a preset time interval, which is shorter than that of data acquisition.

6. A method according to any one of the preceding claims, wherein the data are acquired at a preset time frequency, so as to substantially generate data streams.

7. A method according to any one of the preceding claims, wherein the data are acquired by a mobile telecommunications apparatus (2, 2a', 2a''), such as a cellular telephone, a tablet or the like.

8. A method according to any one of the preceding claims, comprising a step of generating integrity information relating to at least a part of the acquired data, so as to ensure the authenticity thereof.

9. A method according to claim 8, wherein the generated integrity information is encrypted through a cryptography algorithm, and wherein the verification step also comprises comparing the video data and at least one of the telemetric data and the geolocation data with the integrity information.

10. A system for implementing the method according to any one of the preceding claims, comprising:
- at least one mobile apparatus (2, 2a, 2a', 2a'') adapted to be positioned into a vehicle, comprising data acquisition means configured for acquiring data relating to the vehicle where it has been positioned;
- processing means (10) configured for processing the information acquired by said at least one electronic apparatus (2, 2a, 2a', 2a''),
- communication means allowing communication between the mobile apparatus (2, 2a, 2a', 2a'') and the processing means (10),
**characterized in that** it comprises verification means for verifying the authenticity of the data acquired by said mobile apparatus (2, 2a, 2a', 2a'') and transmitted to the processing means (10).

11. A system according to claim 10, wherein the verification means are at least partly allocated in the processing means (10).

12. A system according to claim 11, wherein the data acquired by said at least one mobile apparatus (2) are video data.

13. A system according to claim 11 or 12, wherein the data acquired by said at least one electronic apparatus (2) comprise at least two streams of information, and wherein the verification means (10) are configured for verifying the authenticity of the information by comparing the information contained in said streams on the basis of a common time reference.

14. A system according to any one of claims 11 to 13, wherein the verification means are at least partly allocated also in said at least one electronic apparatus (2a, 2a', 2a'').

15. A system according to claim 14, wherein said at least one electronic apparatus (2a, 2a', 2a'') is also configured for generating integrity information relating to the data transmitted to the processing means (10), and for transmitting said integrity information to said processing means (10), which will then use it to verify the authenticity of the received data.

16. A system according to claim 15, wherein said at least one electronic apparatus (2a, 2a', 2a'') is configured for generating the integrity information through a cryptographic hashing algorithm.

17. A mobile apparatus (2), comprising
- data acquisition means (211) for acquiring video, audio, telemetric, geolocation data,
- communication means adapted to allow transmission of said information over a data network,
**characterized in that**
the communication means are configured for being able to transmit encrypted integrity information relating to the acquired data.

18. A computer program product which can be loaded into the memory of an electronic apparatus such as a cellular telephone (2), a computer (PC) and the like, **characterized in that** it comprises a portion of software code for implementing the steps of the method according to any one of claims 1 to 9.
